# EUROPEAN PATENT APPLICATION

(11) **EP 1 916 615 A1**
(43) Date of publication of application: **30.04.2008**
(21) Application number: 07107125.2
(22) Date of filing: 27.04.2007
(51) Int. Cl.: G06F 21/20, G07C 9/00

(54) **Biometric authentication method**

(30) Priority: 25.10.2006 JP 2006289701
(71) Applicant: Fujitsu Ltd., Kawasaki-shi, Kanagawa 211-8588 (JP)
(72) Inventor: Ikegami, Jun c/o FUJITSU LIMITED,, Kawasaki-shi, Kanagawa 211-8588 (JP)
(74) Representative: Fenlon, Christine Lesley

(57) **Abstract**

A biological authentication system which has a high authentication success rate and a low improper authentication rate and does not inconvenience users is proposed. In a server connected to a client, which creates biological data of a user to be authenticated, over a network and performs the authentication determination on the user, user authentication is performed by comparing identification information stored in the client and the identification information of reference biological data if multiple pieces of reference biological data have the degree of agreement with the biological data transmitted from the client beyond a set value.

## Description

### BACKGROUND OF THE INVENTION

### 1. Field of the Invention

The present invention relates to a system, client and server for performing biological authentication by comparing biological data of a user and registered reference biological data.

### 2. Description of the Related Art

Highly precise personal authentication technologies are increasingly important in IT (information technology) systems. In particular, biological authentication that performs personal authentication by using biological information is gathering attentions. The biological authentication performs authentication of a user by reading biological information such as fingerprints, a palm vein pattern and an iris by using an input device, creating biological data resulting from the extraction of features of the biological information and comparing it with registered reference biological data. The biological authentication is highly familiar to general users and is highly usable because the inconvenience of password input and the load of secret management are not imposed on users, the illegal use is not easy, and the security is high.

On the other hand, the biological data obtained every time an authentication operation is performed may not provide the strict identity. Therefore, in comparing it with reference biological data, the success or failure of the authentication must be determined by defining a threshold value for the degree of the agreement between data. If the threshold value is defined high here, the created biological data may vary largely in some biological states and/or ways of inputting biological information, which results in the determination of the authentication failure despite of the identity and inconveniences the user. On the other hand, if the threshold value is defined low here in order not to inconvenience users, the comparison with biological data of a different person may highly possibly result in the determination of the authentication success.

One method is to increase an amount of biological information to be obtained in order to increase the success rate of the authentication and decrease the improper authentication rate. However, since increasing the amount of information to be obtained and compared increases the complexity of the input device and also increases the amount of data to be handled, the prices of the authentication systems and services are increased. Accordingly, some fields may desire authentication systems at low prices. For example, a possible application is that a mobile terminal or a personally-owned terminal connected to a network is used to obtain biological data, and a service provider checks a personal identity through biological authentication to provide a service and/or an access right. In a typical example, the biological authentication may be used for payment processing in an online shopping using a mobile terminal. For such a personally-owned terminal, extremely inexpensive and simple input devices and authentication systems are desired. Therefore, a highly usable biological authentication technology is desired in a low price but with a high authentication success rate, a low improper authentication rate and without the necessity for complex operations such as password input.

Regarding the biological authentication, technologies such as the one disclosed in Patent Document 1 have been proposed.

There are, for example techniques described in Japanese Unexamined Patent Application Publication No. 2000-259278.

### SUMMARY OF THE INVENTION

According to an embodiment of a first aspect of the present invention, there is provided a biometric authentication method comprising obtaining biometric data of a user by inputting biometric information of the user by a client, sending said biometric data obtained by the client and identification information of the client to a server, performing authentication of the user by the server on the basis of said biometric data and said identification information received by the server and reference biometric data of the user and reference identification information of the client stored in the server.

According to an embodiment of the present invention, user authentication is performed based on biological data of a user, which is obtained and created in a client, and information from which the client is identifiable. Therefore, a biological authentication system can be realized which has a high authentication success rate and a low improper authentication rate and does not inconvenience users.

### BRIEF DESCRIPTION OF THE DRAWINGS

Fig. 1 is a diagram showing an entire hardware configuration of a client.
Fig. 2 is a diagram showing an entire hardware configuration of a server.
Fig. 3 is a functional block diagram of reference biological data creating processing in Example 1.
Fig. 4 is a flowchart of the reference biological data creating processing in Example 1.
Fig. 5 is a functional block diagram of biological authentication processing in Example 1.
Fig. 6 is a flowchart (Part 1) of the biological authentication processing in Example 1.
Fig. 7 is a flowchart (Part 2) of the biological authentication processing in Example 1.
Fig. 8 is a functional block diagram of reference biological data creating processing in Example 2.
Fig. 9 is a flowchart of the reference biological data creating processing in Example 2.
Fig. 10 is a functional block diagram of reference biological data creating processing in Example 2.
Fig. 11 is a flowchart (Part 1) of the biological authentication processing in Example 2.
Fig. 12 is a flowchart (Part 2) of the biological authentication processing in Example 2.

### DESCRIPTION OF THE PREFERRED EMBODIMENTS

With reference to drawings, an embodiment of the present invention will be described below. Though examples will describe a case in which fingerprints are used as biological information, the biological information may be a palm vein pattern, an iris or the like.

### First Embodiment:

Example 1 describes a case in which a specific user uses a specific client to perform biological authentication. Though a biological authentication system is constructed by connecting a client and a server over a network in Example 1, a cellular phone, a PDA (Personal Data Assistant) or the like may be used, for example, instead of the client.

### Hardware Configuration Diagram:

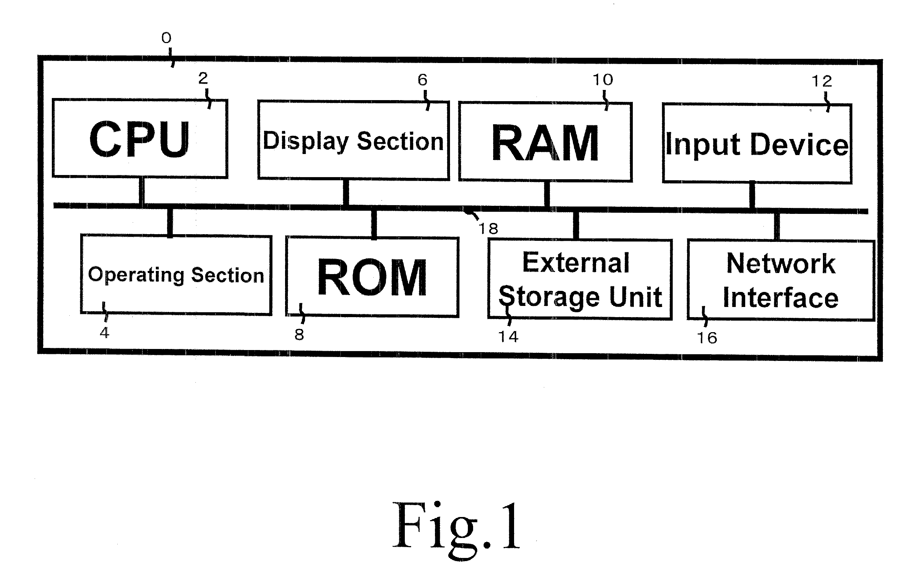

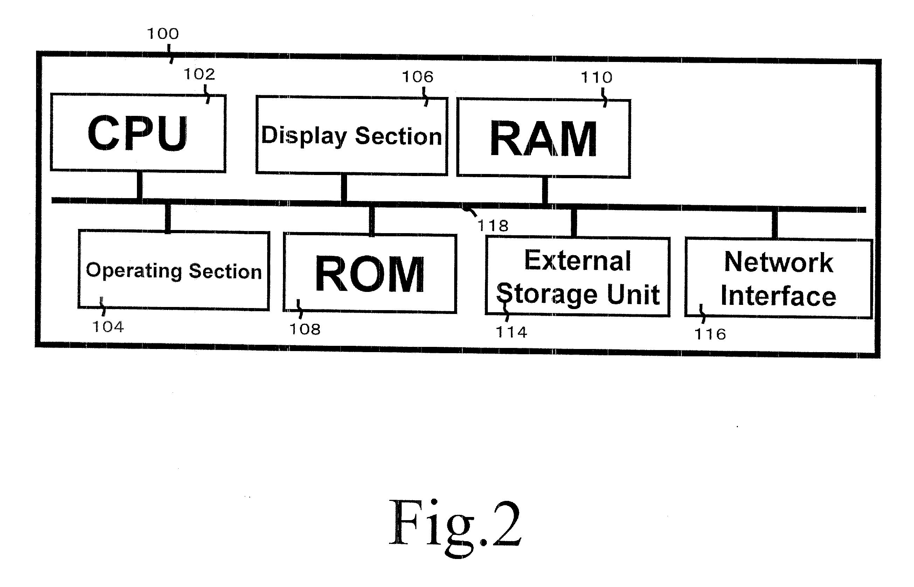

Figs. 1 and 2 are block diagrams schematically showing examples of hardware configurations of a client 0 and a server 100 constructing a biological authentication system.

The client 0 is constructed by connecting a CPU (Central Processing Unit) 2 that performs computing processing, an operating section 4 that receives the input of data, a display section 6 that displays information, a ROM (Read Only Memory) 8 that stores a program, a RAM (Random Access Memory) 10 that executes a program and/or stores data, an input device 12 that reads biological information of a user as an image, an external storage device 14 that stores a biological authentication program and unique information, which is information unique to the client 0, for example, and a network interface 16 that exchanges data with the server 100 over a network through a bus 18.

The server 100 is constructed by connecting a CPU (Central Processing Unit) 102 that performs computing processing, an operating section 104 that receives the input of data, a display section 106 that displays information, a ROM (Read Only Memory) 108 that stores a program, a RAM (Random Access Memory) 110 that executes a program and/or stores data, an external storage device 114 that stores a biological authentication program and reference biological data, which is a reference for a user, for example, and a network interface 116 that exchanges data with the client 0 over a network through a bus 118.

In the client 0, in response to a command to perform biological authentication from the operating section 4 by a user, the CPU 2 displays on the display section 6 to use the input device 12 to input biological information. The input device 12 reads biological information of the user as an image. Then, the CPU 2 executes a biological authentication program by loading and expanding the biological authentication program from the external storage device 14 to the RAM 10. The biological authentication program creates biological data from the image of the biological information read by the input device 12. The biological data is transmitted to the server 100 through the network interface 16.

Also in the server 100, the CPU 102 executes a biological authentication program in the same manner by loading and expanding the biological authentication program from the external storage device 114 to the RAM 110. The biological authentication program performs biological authentication by co the biological data transmitted from the client 0 and reference biological data stored in the external storage device 114.

Notably, the biological authentication program is not always required to store in the external storage devices 14 and 114 from the beginning. For example, the biological authentication program may be stored from a program provider side to the external storage devices 14 and 114 through a public switched line, the Internet, a LAN, a WAN or the like. The biological authentication program stored in a portable storage medium may be set in the client and the server and be executed by the CPUs 2 and 102. Storage media in various forms are applicable as the portable storage medium such as a CD-ROM, an optical disk and a DVD.

### Functional Block Diagram (Part 1):

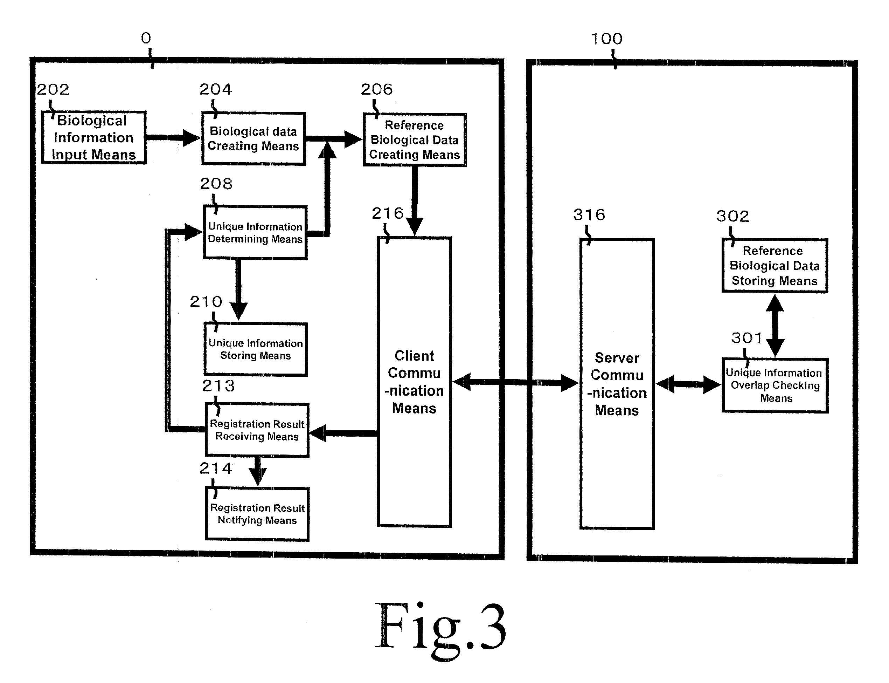

Fig. 3 is a functional block diagram schematically showing an example of a reference biological data creating function. The reference biological data creating function is constructed by the client 0 and the server 100. The reference biological data creating function of the client 0 is constructed by biological information input means 202, biological data creating means 204, reference biological data creating means 206, unique information determining means 208, unique information storing means 210, registration result receiving means 213, registration result notifying means 214 and client communication means 216. The reference biological data creating function of the server 100 is constructed by server communication means 316, unique information overlap checking means 301 and reference biological data storing means 302. The means of the reference biological data creating function will be described below.

### Biological Information Input Means:

The biological information input means 202 reads fingerprints, which are biological information of a user, as an image. Then, the biological information input means 202 commands the biological data creating means 204 to create biological data based on the read fingerprint image.

### Biological Data Creating Means:

The biological data creating means 204 extracts a characteristic point, for example, from the user's fingerprint image read by the biological information input means 202 and creates biological data to be used for creating reference biological data on which the reference biological data creating means 206 based for the user. The biological data is used by one-to-N comparing means 304 to compare with the reference biological data. The reference biological data creating means 206 and one-to-N comparing means 304 will be described later.

### Unique Information Determining Means:

The unique information determining means 208 determines unique information to be associated with the biological data for creating the reference biological data by the reference biological data creating means 206. The unique information is only required to determine a client uniquely. As the unique information, a Mac address, which is a unique value to a client, is applicable. The reference biological data creating means 206 will be described later.

### Reference Biological Data Creating Means:

The reference biological data creating means 206 creates reference biological data that associates biological data and unique information. The reference biological data is used for comparison by the one-to-N comparing means 304.

### Unique Information Storing Means:

The unique information storing means 210 stores unique information determined by the unique information determining means.

### Registration Result Receiving Means:

The registration result receiving means 213 determines whether reference biological data has been stored in the reference biological data storing means 302 or not. The reference biological data storing means 302 will be described later.

### Registration Result Notifying Means:

The registration result notifying means. 214 displays on the display section 6 that reference biological data has been stored in the reference biological data storing means 302 and notifies a user that the reference biological data has been registered with the server.

### Client Communication Means:

The client communication means 216 transmits reference biological data created by the reference biological data creating means 206 to the server. The client communication means 216 further receives the notification that reference biological data has been registered with the server from the server. The client communication means 216 additionally exchanges data with the server.

### Reference Biological Data Storing Means:

The reference biological data storing means 302 stores reference biological data transmitted from a client.

### Unique Information Overlap Checking Means:

The unique information overlap checking means 301 determines whether any overlap exists between the unique information of reference biological data transmitted from a client and the unique information of reference biological data already stored in the reference biological means 302 or not. If no overlaps exist in the unique information, the reference biological data is stored in the reference biological data storing means 302. Then, the unique information overlap checking means 301 transmits the fact that the storing has completed to a client through the server communication means 316. On the other hand, if some overlap exists in the unique information, the unique information overlap checking means 301 transmits a request for the reset of unique information to a client through the server communication means 316. The server communication means 316 will be described later.

### Server Communication Means:

The server communication means 316 receives reference biological data transmitted from a client. The server communication means 316 transmits to a client that the unique information overlap checking means 301 has completely stored reference biological data in the reference biological data storing means 302. The server communication means 316 additionally exchanges data with a client.

### Flow of Preparation:

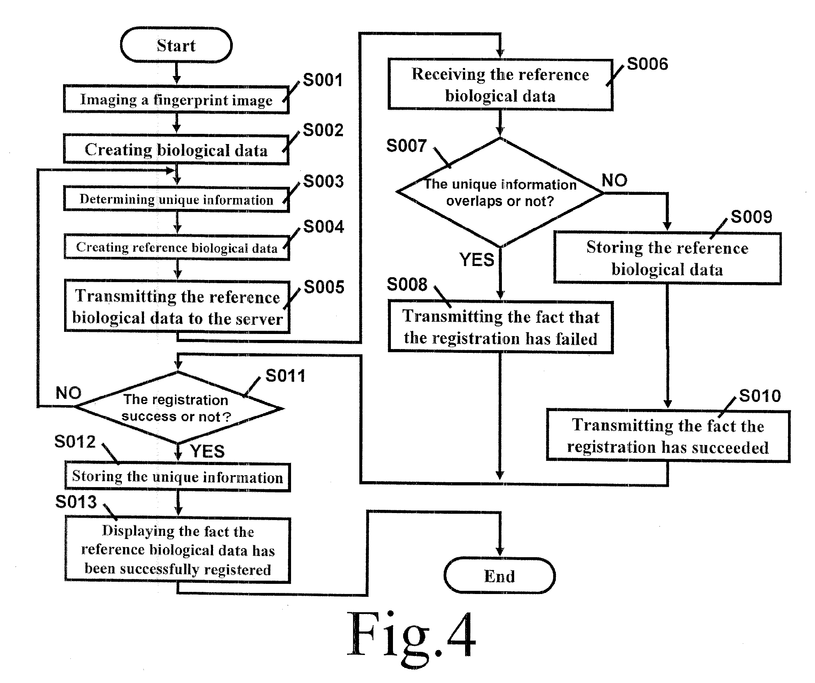

With reference to Fig. 4, processing of creating reference biological data, which is a reference for a user in a comparison operation, will be described below.

In step S001, the biological information input means 202 images a fingerprint image of a user, which is input through the input device 12 in the client 0. The processing moves to step S002.

In step S002, the biological data creating section 204 creates biological data based on the user's fingerprint image imaged by the biological information input means 202. The processing moves to step S003.

In step S003, the unique information determining means 208 determines unique information. Notably, the unique information may be a random number generated by a client or a server instead of the one described above. The processing moves to step S004.

In step S004, the reference biological data creating means 206 creates reference biological data that associates biological data and unique information. Based on this, even if multiple pieces of reference biological data are similar to input user's biological data, the biological authentication can be performed based on the unique information. The processing moves to step S005.

In step S005, the client communication means 216 transmits the reference biological data created by the reference biological data creating means to the server communication means 316 to register the reference biological data with the server 100. The processing moves to step S006.

In step S006, the server communication means 316 receives the reference biological data transmitted from the client communication means 216. The processing moves to step S007.

In step S007, the unique information overlap checking means 301 compares the unique information of the reference biological data already stored in the reference biological data storing means 302 and the unique information of the reference biological data received by the server communication means 316 in step S006 and determines whether the unique information overlaps with each other or not. If the unique information overlaps, the processing moves to step S008 where the server communication means 316 transmits the fact that the registration has failed to the client communication means 216. On the other hand, if no unique information overlaps, the processing moves to step S009. Thus, the reference biological data having the overlapping unique information can be prevented from being stored in the server 100. Then, the one-to-N comparing means 304 can perform the biological authentication, keeping the security based on the unique information.

In step S009, the unique information overlap checking means 301 stores the reference biological data received in step S006 in the reference biological data storing means 302. The processing moves to step S010.

In step S010, the server communication means 316 transmits the fact that the registration has succeeded to the client communication means 216. The processing moves to step S011.

In step S011, the registration result receiving means 213 determines whether the result transmitted from the server communication means 316 to the client communication means 216 is the registration success or not. If so, the processing moves to step S012. If not on the other hand, the processing returns to step S003, and the processing above is repeated.

In step S012, the unique information determining means 208 stores the unique information determined in step S003 in the unique information storing means 210. The processing moves to step S013.

In step S013, the registration result notifying means 214 displays the fact that the reference biological data has been successfully registered on the display section 6 of the client 0. The processing ends.

### Functional Block Diagram (Part 2):

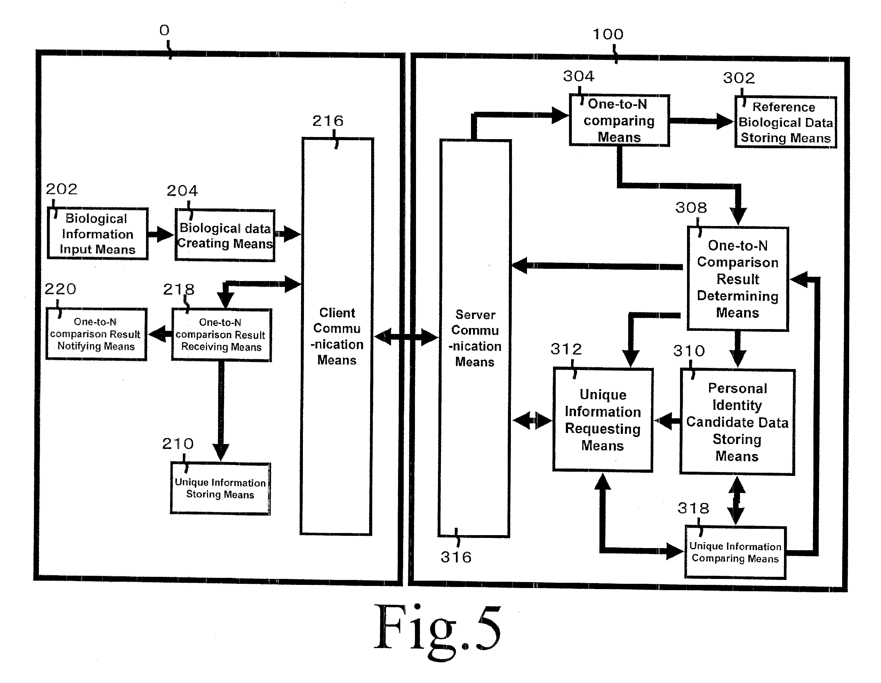

Fig. 5 is a functional block diagram schematically showing an example of the biological authentication function. The biological authentication function is constructed by the client 0 and the server 100. The biological authentication function of the client 0 is constructed by biological information input means 202, biological data creating means 204, unique information storing means 210, client communication means 216, one-to-N comparison result receiving means 218, and one-to-N comparison result notifying means 220. The biological authentication function of the server 100 is constructed by server communication means 316, reference biological data storing means 302, one-to-N comparing means 304, one-to-N comparison result determining means 308, personal identity candidate data storing means 310, unique information requesting means 312 and unique information comparing means 318. The means of the biological authentication function will be described below. The same reference numerals are given to the means described on the functional block diagram (Part 1) in Fig. 3, and the description will be omitted.

### One-To-N Comparison Result Receiving Means:

The one-to-N comparison result receiving means 218 determines whether the comparison result transmitted from the server 100 is the authentication success or not. Then, the one-to-N comparison result receiving means 218 notifies the comparison result to the one-to-N comparison result notifying means 220. If the comparison result transmitted from the server 100 is the authentication failure and if obtaining unique information is requested by the server 100, the one-to-N comparison result receiving means 218 obtains the unique information from the unique information storing means 210.

### One-To-N Comparison Result Notifying Means:

The one-to-N comparison result notifying means 220 displays the comparison result notified from the one-to-N comparison result receiving means 218 on the display section 6 of the client 0.

### One-To-N Comparing Means :

The one-to-N comparing means 304 calculates the degree of agreement by comparing the biological data transmitted from a client and the reference biological data stored in the reference biological data storing means 302. The expression, "degree of agreement", here refers to the degree of agreement between the biological data and the reference biological data.

### One-To-N Comparison Result Determining Means:

The one-to-N comparison result determining means 308 compares the degree of agreement calculated by the one-to-N comparing means 304 and a threshold value defined by a user and obtains the reference biological data beyond the threshold value. Then, the one-to-N comparison result determining means 308 determines whether the authentication has succeeded or not by determining whether the degree of agreement is equal to or higher than the defined threshold value or not. Notably, the threshold value is desirably defined based on the aimed security level. If the reference biological data beyond the threshold value is unique, the one-to-N comparison result determining means 308 transmits the fact of the authentication success to the client through the server communication means 316. If multiple pieces of reference biological data are beyond the threshold value, the one-to-N comparison result determining means 308 stores the reference biological 1 data in the personal identity candidate data storing means 310. Then, the one-to-N comparison result determining means 308 commands the unique information requesting means 312 to obtain unique information stored in the client. If the authentication success is determined based on the unique information, the one-to-N comparison result determining means 308 transmits the fact of the authentication success to the client 0 through the server communication means 316. The unique information requesting means 312 will be described later.

### Personal Identity Candidate Data Storing Means:

The personal identity candidate data storing means 310 stores multiple pieces of reference biological data obtained by the one-to-N comparison result determining means 308.

### Unique Information Requesting Means:

The unique information requesting means 312 requests unique information to a client through the server communication means 316.

### Unique Information Comparing Means:

The unique information comparing means 318 compares the unique information obtained by the unique information requesting means 312 and the unique information of the multiple pieces of reference biological data stored on the personal identity candidate data storing means 310 and determines whether any agreement exists between them or not. If some unique information agrees, the fact is notified to the one-to-N comparison result determining means 308.

### Flow of Biological Authentication:

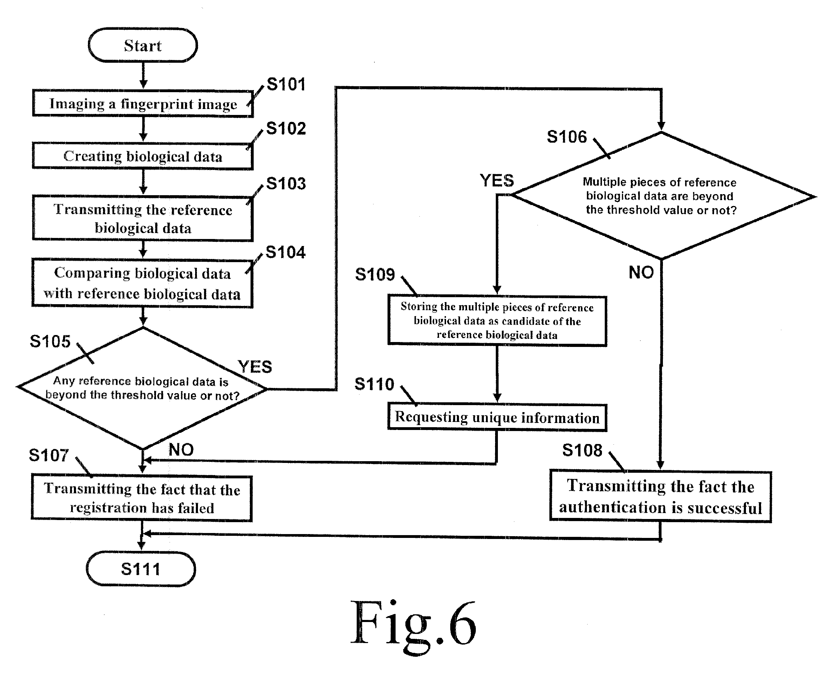

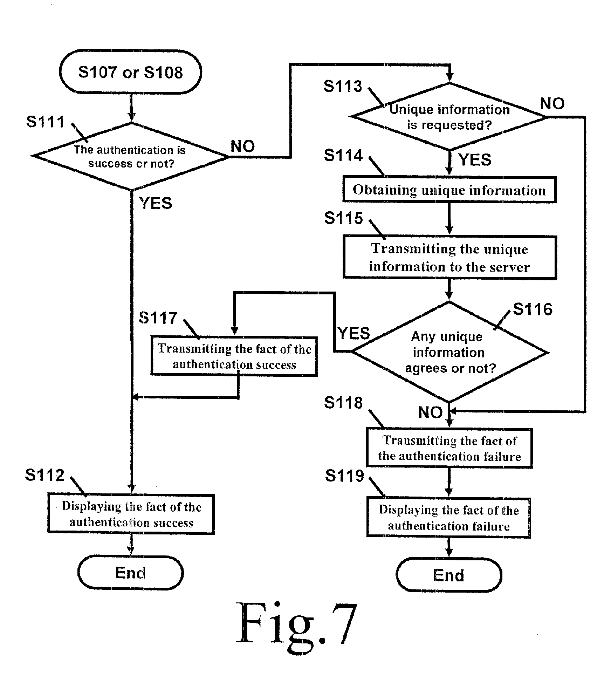

With reference to Figs. 6 and 7, processing of the biological authentication will be described below.

In step S101, the biological information input means 202 images a fingerprint image of a user. The processing moves to step S102.

In step S102, the biological data creating means 204 creates biological data based on the user's fingerprint image imaged by the biological information input means 202. The processing moves to step S103.

In step S103, the client communication means 216 transmits the biological data created by the biological data creating means 204 to the server communication means 316. The processing moves to step S104.

In step S104, the one-to-N comparing means 304 compares the biological data received by the server communication means 316 and multiple pieces of reference biological data already registered with the reference biological data storing means 302 and calculates the degree of agreement. The processing moves to step S105.

In step S105, the one-to-N comparison result determining means 308 compares the degree of agreement calculated in step S104 and a threshold value defined by a user and determines whether any reference biological data is beyond the threshold value or not. If so, the processing moves to step S106. If not on the other hand, the processing moves to step S107.

In step S106, the one-to-N comparison result determining means 308 determines whether multiple pieces of reference biological data are beyond the threshold value defined by the user or not. If so, the processing moves to step S109. If the reference biological data beyond the threshold value is unique on the other hand, the processing moves to step S108 where the one-to-N comparison result determining means 308 determines the authentication success. Then, the fact of the authentication success is transmitted from the server communication means 316 to the client communication means 216.

In step S109, the one-to-N comparison result determining means 308 stores the multiple pieces of reference biological data in the personal identity candidate data storing means 310 as candidates of the reference biological data of the identity of the user. The processing moves to step S110.

In step S110, the unique information requesting means 312 requests unique information from the server communication means 316 to the client 0. The processing moves to step S107.

In step S107, the one-to-N comparison result determining means 308 determines the authentication failure and transmits the fact of the authentication failure from the server communication means 316 to the client communication means 216. The processing moves to step S111.

In step S111, the one-to-N comparison result receiving means 218 determines whether the result transmitted from the server communication means 316 to the client communication means 216 is the authentication success or not. If so, the processing moves to step S112. If not on the other hand, the processing moves to step S113.

In step S113, the one-to-N comparison result receiving means 218 determines whether unique information has been requested from the server 100 or not. If so, the processing moves to step S114. If not on the other hand, the processing moves to step S118.

In step S114, the one-to-N comparison result receiving means 218 obtains unique information from the unique information storing means 210. The processing moves to step S115.

In step S115, the one-to-N comparison result receiving means 218 transmits the unique information from the client communication means 216 to the server communication means 316. The processing moves to step S116.

In step S116, the unique information comparing means 318 compares the unique information transmitted from the client communication means 216 and the unique information of the reference biological data stored in the personal identity candidate data storing means 310 and determines whether any unique information agrees or not. If so, the processing moves to step S117 where the authentication success is determined. Then, the unique information comparing means 318 transmits the fact of the authentication success from the server communication means 316 to the client communication means 216, and the processing moves to step S112. On the other hand, if no unique information agrees, the processing moves to step S118 where the authentication failure is determined. Then, the unique information comparing means 318 transmits the fact of the authentication failure from the server communication means 316 to the client communication means 216, and the processing moves to step S119. Thus, even if multiple pieces of reference biological data are similar to the input user's biological data as a result of the comparison performed by the one-to-N comparing means 304, the biological authentication can be performed based on the prestored unique information, which does not inconvenience users.

In step S112, the one-to-N comparison result notifying means 220 displays the fact of the authentication success on the display section 6 of the client 0 if the one-to-N comparison result receiving means 218 recognizes that the fact of the authentication success has been received from the client communication means 216. The processing ends.

In step S119, the one-to-N comparison result notifying means 220 displays the fact of the authentication failure on the display section 6 of the client 0 if the one-to-N comparison result receiving means 218 recognizes that the fact of the authentication failure has been received from the client communication means 216. The processing ends.

### Second Embodiment:

Second embodiment describes a case in which an indefinite number of users use a specific client to perform biological authentication. Since the hardware construction of the biological authentication system is the same as the one described with reference to Figs. 1 and 2 in Example 1, the description will be omitted.

### Functional Block Diagram (Part 3):

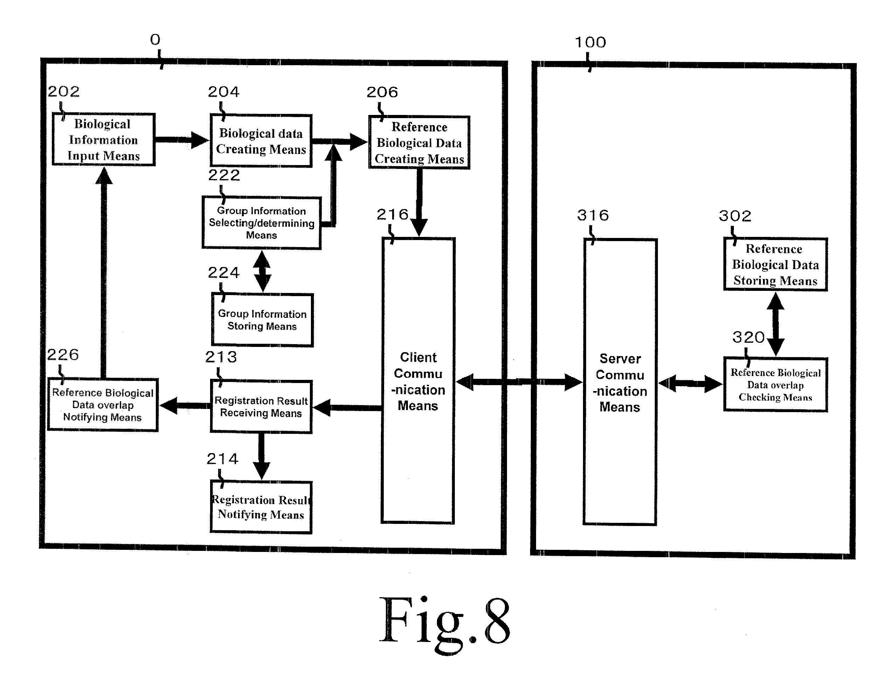

Fig. 8 is a functional block diagram schematically showing an example of a reference biological data creating function. The reference biological data creating function is constructed by the client 0 and the server 100. The reference biological data creating function of the client 0 is constructed by biological information input means 202, biological data creating means 204, reference biological data creating means 206, group information selecting/determining means 222, group information storing means 224, reference biological data overlap notifying means 226, registration result receiving means 213, registration result notifying means 214 and client communication means 216. The reference biological data creating function of the server 100 is constructed by server communication means 316, reference biological data overlap checking means 320, and reference biological data storing means 302. The means of the reference biological data creating function will be described below. The same reference numerals are given to the means already described with reference to the functional block diagrams (Part 1) and (Part 2) in Example 1, and the description will be omitted.

### Group Information Storing Means:

The group information storing means 224 stores information from which a user is not completely identifiable such as the organization that the user belongs to and birth year of the user. In Example 2, the organizations (i.e. division) that users belong to such as "Authentication System Research Division" and "Patent Division" are stored in the group information storing means 224.

### Group Information Selecting/determining Means:

The group information selecting/determining means 222 selects an organization that a user belongs to from the group information storing means. The selected organization becomes the reference biological data in the reference biological data creating means 206 by being associated with the biological data created by the biological data creating means 204.

### Reference Biological Data Overlap Notifying Means :

The reference biological data overlap checking means 320 determines whether any similar reference biological data has been stored already in the reference biological data storing means or not. If so, the reference biological data overlap notifying means 226 displays the fact on the display section 106. The reference biological data overlap checking means 320 will be described later.

### Reference Biological Data Checking Means:

The reference biological data overlap checking means 320 calculates the degree of agreement between the reference biological data transmitted from a client and the reference biological data already stored in the reference biological data storing means 302. If the reference biological data has the same group information and the degree of agreement equal to or higher than a defined threshold value, the fact is transmitted to the client through the server communication means 316.

### Flow of Preparation:

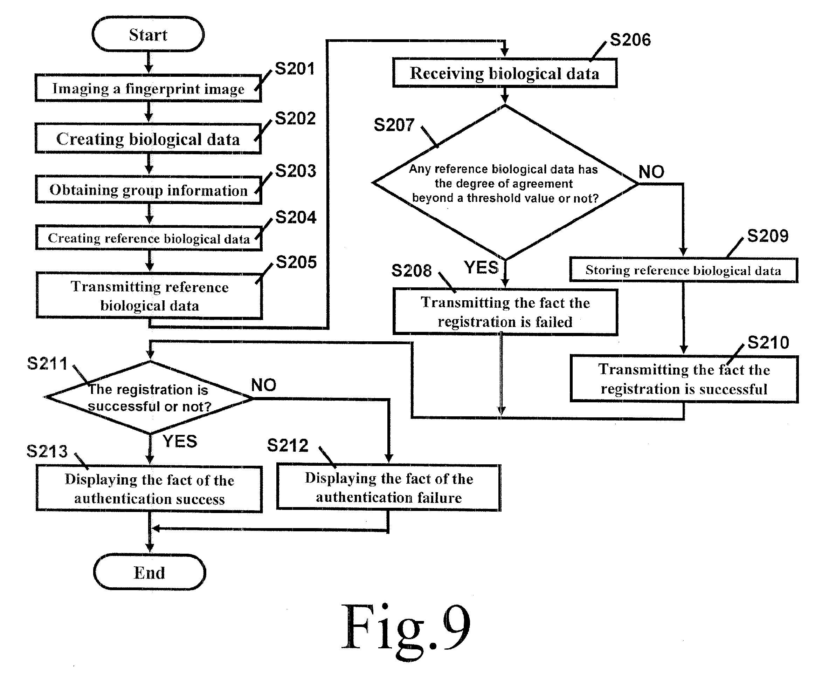

With reference to Fig. 9, processing of creating reference biological data from which a user is identifiable in a comparison operation will be described below.

In step S201, the biological information input means 202 images a fingerprint image of a user, which is input from the input device 12 of the client 0. The processing moves to step S202.

In step S202, the biological data creating section 204 creates biological data based on the user's fingerprint image imaged by the biological information input means 202. The processing moves to step S203.

In step S203, the group information selecting/determining means 222 selects the division from the group information storing means 224 based on an operation by a user through the operating section 4 of the client 0. The processing moves to step S204.

In step S204, the reference biological data creating section 206 creates reference biological data that associates the biological data and the division. The processing moves to step S205.

In step S205, the client communication means 216 transmits the reference biological data created by the reference biological data creating means 206 to the server communication means 316. The processing moves to step S206.

In step S206, the server communication means 316 receives the reference biological data transmitted from the client communication means 216. The processing moves to step S207.

In step S207, the reference biological data overlap checking means 320 compares the reference biological data already stored in the reference biological data storing means 302 and the reference biological data received by the server communication means 316 in step S206 and calculates the degree of agreement. Then, the reference biological data overlap checking means 320 determines whether any reference biological data has the degree of agreement beyond a threshold value defined by a user or not. If so, the processing moves to step S208 where the server communication means 316 transmits the fact of the registration failure to the client communication means 216. If not on the other hand, the processing moves to step S209. Thus, reference biological data having the same division and similar biological data can be prevented from being registered with the server.

In step S209, the reference biological data overlap checking means 320 stores the reference biological data received in step S206 to the reference biological data storing means 302. The processing moves to step S210.

In step S210, the server communication means 316 transmits the fact of the registration success to the client communication means 216. The processing moves to step S211.

In step S211, the registration result receiving means 213 determines whether the result transmitted from the server communication means 316 is the registration success or not. If so, the processing moves to step S213. If not on the other hand, the processing moves to step S212.

In step S212, the registration result notifying means 214 displays the fact of the registration failure on the display section 6 of the client 0. The processing ends.

In step S213, the registration result notifying means 214 displays the fact of the registration success on the display section 6 of the client 0. The processing ends.

### Functional Block Diagram (Part 4):

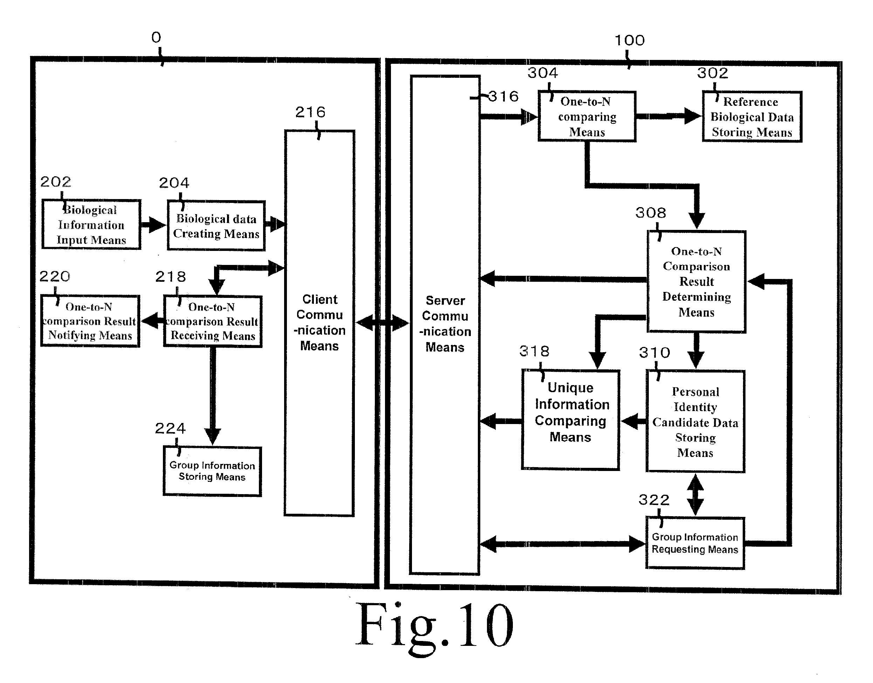

Fig. 10 is a functional block diagram schematically showing an example of a biological authentication function. The biological authentication function is constructed by the client 0 and the server 100. The biological authentication function of the client 0 is constructed by the biological information input means 202, biological data creating means 204, one-to-N comparison result receiving means 218, one-toN comparison result notifying means 220, group information storing means 224 and client communication means 216. The biological authentication function of the server 100 is constructed by server communication means 316, reference biological data storing means 302, one-to-N comparing means 304, one-to-N comparison result determining means 308, personal identity candidate data storing means 310, group information requesting means 318 and group information comparing means 322. The means of the biological authentication function will be described below. The same reference numerals are given to the means already described with reference to the functional block diagrams (Part 1) and (Part 2) in Example 1 and the functional block diagram (Part 3) in Example 2, and the description will be omitted.

### Group Information Requesting Means:

The group information requesting means 318 requests group information to a client through the server communication means 316. The group information in Example 2 is the division information of a user as described above.

### Group Information Comparing Means:

The group information comparing means 322 compares the group information obtained by the group information requesting means 318 and the group information of the reference biological data stored in the personal identity candidate data storing means 310 and determines whether any agreement exists therebetween or not. If so, the fact is notified to the one-to-N comparison result determining means 308.

### Flow of Biological Authentication:

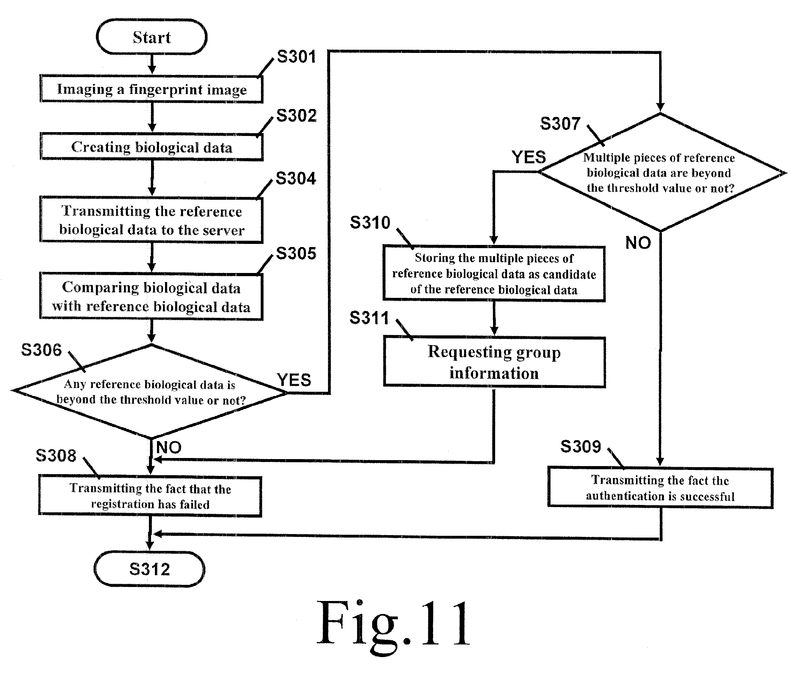

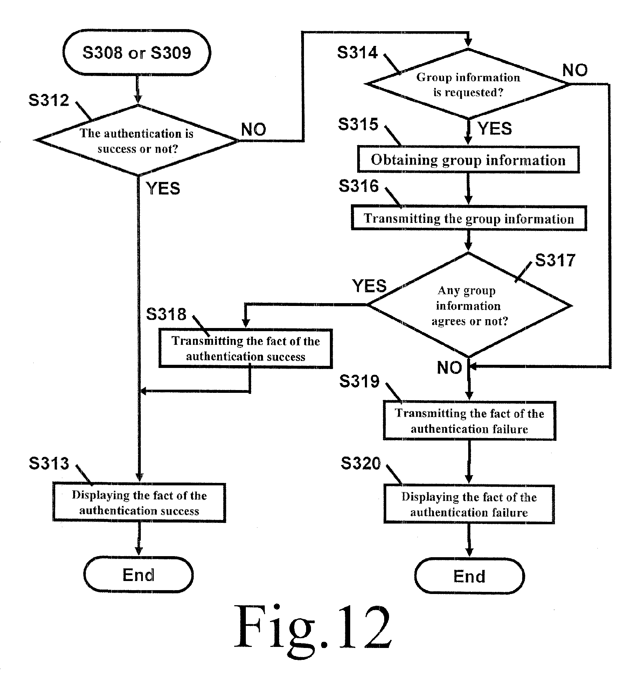

With reference to Figs. 11 and 12, the processing of the biological authentication in Example 2 will be described below. In this example, when a client is started by a user, the group information is defined. The defined group information is stored the group information storing means 224.

In step S301, the biological information input means 202 images a fingerprint image of the user. The processing moves to step S302.

In step S302, the biological data creating means 204 creates biological data based on the user's fingerprint image imaged by the biological information input means 202. The processing moves to step S304.

In step S304, the client communication means 216 transmits the biological data created by the biological data creating means 204 to the server communication means 316. The processing moves to step S305.

In step S305, the one-to-N comparing means 304 compares the biological data received by the server communication means 316 and multiple pieces of reference biological data already registered with the reference biological data storing means 302 and calculates the degree of agreement. The processing moves to step S306.

In step S306, the one-to-N comparison result determining means 308 determines whether any reference biological data is beyond a threshold value defined by the user or not as a result of the comparison in step S305. If so, the processing moves to step S307. If not on the other hand, the processing moves to step S308.

In Step S307, the one-to-N comparison result determining means 308 determines whether multiple pieces of reference biological data have the degree of agreement beyond the threshold value defined by the user or not. If so, the processing moves to step S310. If only one reference biological data is beyond the threshold value, the processing moves to step S309 where the one-to-N comparison result determining means 308 determines the authentication success. Then, the fact of the authentication success is transmitted from the server communication means 316 to the client communication means 216.

In step S310, the one-to-N comparison result determining means 308 stores the multiple pieces of reference biological data having the degrees of agreement beyond the threshold value defined by the user in the personal identity candidate data storing means 310 as the reference biological data of the identity of the user. The processing moves to step S311.

In step S311, the group information requesting means 318 requests group information from the server communication means 316 to the client 0. The processing moves to step S308.

In step S308, the one-to-N comparison result determining means 308 determines the authentication failure and transmits the fact of the authentication failure from the server communication means 316 to the client communication means 216. The processing moves to step S312.

In step S312, the one-to-N comparison result receiving means 218 determines whether the result transmitted from the server communication means 316 to the client communication means 216 is the authentication success or not. If so, the processing moves to step S313. If not on the other hand, the processing moves to step S314.

In step S314, the one-to-14 comparison result receiving means 218 determines whether group information has been requested from the server 100 or not. If so, the processing moves to step S315. If not on the other hand, the processing moves to step S319.

In step S315, the one-to-N comparison result receiving means 218 obtains group information from the group information storing means 224. The processing moves to step S316.

In step S316, the one-to-N comparison result receiving means 218 transmits group information from the client communication means 216 to the server communication means 316. The processing moves to step S317.

In step S317, the group information comparison means 322 compares the group information transmitted from the client communication means 216 and the group information of the reference biological data stored in the personal identity candidate data storing means 310 and determines whether any group information agrees. If so, the processing moves to step S318 whether the authentication success is determined. Then, the group information comparison means 322 transmits the fact of the authentication success from the server communication means 316 to the client communication means 216, and the processing moves to step S313. If not on the other hand, the processing moves to step S319 where the authentication failure is determined. Then, the group information comparing means 322 transmits the fact of the authentication failure from the server communication means 316 to the client communication means 216, and the processing moves to step S320. Thus, even if multiple pieces of reference biological data are similar to the input user's biological data as a result of the comparison by the one-to-N comparing means 304, the biological authentication can be performed based on the prestored group information, which does not inconvenience users.

In step S313, the one-to-N comparison result notifying means 220 displays the fact of the authentication success on the display section 6 of the client 0 if the one-to-N comparison result receiving means 218 recognizes that the fact of the authentication success has been received from the client communication means 216. The processing ends.

In step S320, the cne-to-N comparison result notifying means 220 displays the fact of the authentication failure on the display 6 of the client 0 if the one-to-N comparison result receiving means 218 recognizes that the fact of the authentication failure has been received from the client communication means 216. The processing ends.

The embodiments above describe the present invention more specifically for better understanding and do not limit the form. Therefore, any changes are possible without departing from the spirit and scope of the present invention. For example, in Example 2, if multiple pieces of reference biological data exist as a result of one-to-IV comparison and the identity of a user is not identifiable even by using group information, a construction is possible in which the fact that the user belongs to the group may be transmitted to a client and a specific right may be only given to the user, without the determination of the authentication failure. Having described as a client-server system in Example 2, a stand-alone system having a client only may be adopted, for example. Alternatively, in Examples 1 and 2, the client communication means 216 and server communication means 316 may be configured to encode specific data and transmit the encoded data over a network.

## Claims

1. A biometric authentication method comprising:
obtaining biometric data of a user by inputting biometric information of the user by a client;
sending said biometric data obtained by the client and identification information of the client to a server;
performing authentication of the user by the server on the basis of said biometric data and said identification information received by the server and reference biometric data of the user and reference identification information of the client stored in the server.

2. The biometric authentication method of claim 1, wherein said identification information of the client is unique information of the client or division information indicating a division to which the user belongs to.

3. The biometric authentication method of claim 1, wherein said identification information of the client is a Mac address of the client.

4. The biometric authentication method of claim 1, wherein said identification information of the client is a random number generated by the client or the server.

5. A system comprising:
a client for obtaining biometric data on the basis of biometric information of a user inputted to the client, and for sending out said biometric data obtained by the client and identification information of the client; and
a server storing reference biometric data of the user and reference identification information of the client, for performing authentication of the user on the basis of said biometric data and said identification information received from the client in reference to said reference biometric data and said reference identification information of the client.

6. The system of claim 5, wherein said identification information of the client is unique information of the client or division information indicating a division to which the user belongs to.

7. The system of claim 5, wherein said identification information of the client is a Mac address of the client.

8. The system of claim 5, wherein said identification information of the client is a random number generated by the client or the server.

9. A server capable of communicating with a client for obtaining biometric data of a user on the basis of biometric information of the user inputted at the client, the server comprising:
a storage unit storing reference biometric data of the user and reference identification information of the client, and
a central processing unit for performing authentication of the user on the basis of said biometric data obtained by the client and identification information of the client received from the client in reference to said reference biometric data and said reference identification information of the client.

10. The server of claim 9, wherein said identification information of the client is unique information of the client or division information indicating a division to which the user belongs to.

11. The server of claim 9, wherein said identification information of the client is a Mac address of the client.

12. The server of claim 9, wherein said identification information of the client is a random number generated by the client or the server.
